# EUROPÄISCHE PATENTSCHRIFT

(11) **EP 0 382 197 B1**
(45) Veröffentlichungstag und Bekanntmachung des Hinweises auf die Patenterteilung: **11.08.1993**
(21) Anmeldenummer: 90102427.3
(22) Anmeldetag: 07.02.1990
(51) Int. Cl.: F16D 13/64

(54) **Kupplungsscheibe**
Clutch disc
Disque d'embrayage

(30) Priorität: 08.02.1989 DE 3903651; 29.06.1989 DE 3921283
(43) Veröffentlichungstag der Anmeldung: 16.08.1990
(73) Patentinhaber: Fichtel & Sachs AG, D-97419 Schweinfurt (DE)
(72) Erfinder: Fischer, Matthias, Dipl.-Ing., D-8721 Euerbach (DE); Wiedmann, Rainer, Dipl.-Ing., D-8721 Niederwerrn (DE); Fädler, Kurt, Dipl.-Ing., D-8721 Niederwerrn (DE); Jeppe, Harald, Dipl.-Ing., D-8720 Schweinfurt (DE)
(74) Vertreter: Liska, Horst, Dr.-Ing.

(56) Entgegenhaltungen:
- DE-A- 3 532 951
- FR-A- 1 208 127
- FR-A- 1 422 619
- FR-A- 1 597 398
- FR-A- 2 186 091
- FR-A- 2 496 786
- FR-A- 2 624 236
- GB-A- 2 080 488

## Beschreibung

Die Erfindung betrifft eine Kupplungsscheibe für eine Reibungskupplung, insbesondere eines Kraftfahrzeugs.

Aus der DE-A-3 340 896 (US-A-4 635 780) ist eine Kupplungsscheibe mit einer Nabe und einer radial zu einer Drehachse der Nabe von dieser abstehenden Nabenscheibe sowie einer zylindrischen Lagerfläche axial seitlich der Nabenscheibe bekannt. Axial beiderseits der Nabenscheibe sind zwei fest miteinander verbundene Seitenscheiben angeordnet, die relativ zu der Nabenscheibe um einen begrenzten Drehwinkel drehbar sind und die eine zentrale Öffnung haben, durch die die Nabe tritt. Die Seitenscheiben sind über mehrere Federn drehelastisch mit der Nabenscheibe gekuppelt, und in einer zentralen Öffnung einer der beiden Seitenscheiben ist drehfest ein Kunststoff-Lagerring gehalten, welcher einen ringförmig geschlossenen, an der Seitenscheibe anliegenden Ringteil und einen zur Drehachse geneigt von dem Ringteil zur Nabe sich erstreckenden, an der zylindrischen Lagerfläche der Nabe abgestützten, radial elastischen Verbindungsbereich aufweist.

Bei dieser Kupplungsscheibe werden die beiden zusammen mit den Reibbelägen der Kupplungsscheibe eine Einheit bildenden Seitenscheiben von einem Lagerring an der Nabe geführt, der drehfest mit einer der Seitenscheiben verbunden ist. Der Lagerring hat die Form einer axial seitlich an der Seitenscheibe anliegenden Ringscheibe, von deren Innenumfang zu einem Konus geformte Federzungen durch eine zentrale Öffnung der Seitenscheibe hindurchgreifen. Die Federzungen führen im Bereich ihrer Basis die Seitenscheibe und liegen mit ihren Enden unter radialer Vorspannung an einer zylindrischen Lagerfläche der Nabe der Kupplungsscheibe an. Ein derartiger preiswert herstellbarer Lagerring hält die Seitenscheiben spielfrei an der Nabe und gleicht Herstellungstoleranzen aus.

Es hat sich gezeigt, daß ein Lagerring der bekannten Art Fluchtfehler zwischen Getriebewelle und Kurbelwelle in nur begrenztem Umfang ausgleichen kann. Insbesondere bei Motor-Getriebe-Konstruktionen, bei welchen die Getriebewelle nicht mehr wie bisher üblich in einem Pilotlager der Kurbelwelle gelagert ist, können größere Fluchtfehler zwischen Getriebewelle und Kurbelwelle auftreten, die die Funktion eines in der Kupplungsscheibe vorgesehenen Drehschwingungsdämpfers beeinträchtigen können. Wenngleich die durch den bekannten Lagerring verursachte Grundreibung des Drehschwingungsdämpfers vergleichsweise klein ist, so ist sie doch für eine Vielzahl Anwendungsfälle noch zu groß und wirkt sich nachteilig auf die Dämpfungseinrichtungen des Drehschwingungsdämpfers aus, speziell dann, wenn Fluchtungsfehler zwischen der Getriebewelle und der Kurbelwelle oder Schrägstellungsfehler dieser Wellen auftreten. Bei der bekannten Kupplungsscheibe liegen die Federzungen mit ihren Zungenkanten an der Nabe an, was zu erhöhten Kantenpressungen, erhöhtem Verschleiß und unterschiedlichen Reibwerten führt.

Aus FR-A-2 496 786 ist eine Kupplungsscheibe für eine Kraftfahrzeug-Reibungskupplung bekannt, bei welcher ähnlich der vorstehend erläuterten Kupplungsscheibe eine der beiden drehfest miteinander verbundenen Seitenscheiben über einen Kunststoff-Lagerring an einer zylindrischen Lagerfläche der Nabe geführt ist. Der Kunststoff-Lagerring trägt an seinem Innenumfang und an seinem Außenumfang jeweils mehrere gegeneinander versetzte Lagervorsprünge, die, relativ zueinander federnd, radiales Spiel bei Fluchtungsfehlern zwischen den Seitenscheiben und der Nabe ausgleichen können. Der Lagerring hält jedoch die Seitenscheiben mit wenn auch geringer radialer Vorspannung an der Nabe. Für die axiale Fixierung des Lagerrings steht von dem Ringteil ein Ringflansch radial nach außen ab.

Aus der GB-A-2 080 488 ist schließlich eine Kupplungsscheibe für eine Kraftfahrzeug-Reibungskupplung bekannt, bei welcher nicht nur die beiden zu einer Einheit miteinander verbundenen Seitenscheiben, sondern auch die drehelastisch mit den Seitenscheiben gekuppelte Nabenscheibe über einen begrenzten Drehwinkel drehbar an der Nabe geführt ist. Die Nabenscheibe ist mit einem Nabenteil versehen, das seinerseits über einen Lagerring drehbar an der Nabe gelagert ist. Von dem Lagerring steht ein Fortsatz ab, der für die axiale Fixierung des Nabenteils in eine Aussparung der Nabe hineingeprägt ist.

Es ist Aufgabe der Erfindung, eine mit einem Drehschwingungsdämpfer versehene Kupplungsscheibe zu schaffen, bei welcher auch größere Fluchtungsfehler zwischen Getriebewelle und Kurbelwelle ausgeglichen werden können, ohne daß die Funktion des Drehschwingungsdämpfers beeinträchtigt wird.

Die Erfindung geht von einer Kupplungsscheibe für eine Reibungskupplung, insbesondere eines Kraftfahrzeugs aus, umfassend eine Nabe mit einer radial zu einer Drehachse der Nabe von dieser abstehenden Nabenscheibe und einer zylindrischen Lagerfläche axial seitlich der Nabenscheibe,
zwei axial beiderseits der Nabenscheibe angeordnete, miteinander fest verbundene Seitenscheiben, die relativ zu der Nabenscheibe um einen begrenzten Drehwinkel drehbar sind und je eine zentrale Öffnung haben, durch die die Nabe tritt,
mehrere die Seitenscheiben drehelastisch mit der Nabenscheibe kuppelnde Federn und
einen in der zentralen Öffnung einer der beiden Seitenscheiben drehfest gehaltenen Kunststoff-Lagerring, welcher einen ringförmig geschlossenen, an der Seitenscheibe anliegenden Ringteil und einen von dem Ringteil zur Nabe sich erstreckenden, an der zylindrischen Lagerfläche der Nabe abgestützten, radial elastischen Verbindungsbereich aufweist, wobei der Ringteil mit seinem äußeren Umfang in der zentralen Öffnung der Seitenscheibe gehalten ist und einen radial nach außen abstehenden, den Ringteil relativ zur Seitenscheibe axial fixierenden Ringflansch trägt.

Ausgehend von einer Kupplungsscheibe der eingangs erläuterten Art ist erfindungsgemäß vorgesehen, daß der Verbindungsbereich zur Dichachse geneigt von einem inneren Umfang des Ringteils absteht und eine im wesentlichen ohne radiale Vorspannung an der zylindrischen Lagerfläche der Nabe anliegende zylindrische Gegen-Lagerfläche trägt.

Da die Seitenscheibe an dem in Umfangsrichtung geschlossenen Ringteil radial abgestützt ist, wirken sich Positionsänderungen des Verbindungsbereichs bei Fluchtungsfehlern nicht auf die Position des Ringteils relativ:-zur Seitenscheibe aus. Dies wirkt sich günstig auf die Toleranzausgleichseigenschaften des Lagerrings aus und mindert die Einflüsse auf den Drehschwingungsdämpfer der Kupplungsscheibe, insbesondere dann, wenn der Nabenscheibe zugewandte axiale Stirnflächen des Lagerrings zugleich Reibflächen von Reibeinrichtungen des Drehschwingungsdämpfers bilden. Der Verbindungsbereich des Lagerrings ist so gestaltet, daß die an der Nabe anliegende Gegen-Lagerfläche des Lagerrings im wesentlichen ohne radiale Vorspannung anliegt, was die Grundreibung des Reibungsdämpfers mindert. Da die Gegenlagerfläche ebenfalls zylindrisch ist, werden Kantenpressungen, wie sie bei dem bekannten Lagerring auftreten können, wesentlich gemindert. Der im Rahmen der Erfindung vorgesehene Lagerring erlaubt es, unerwünschte Einflüsse aufgrund von Fluchtungsfehlern der Getriebewelle und der Kurbelwelle und deren Relativbewegungen von dem Drehungschwingungsdämpfer fernzuhalten.

In einer bevorzugten Ausgestaltung sind an dem vorzugsweise als einteiliges Kunststofformteil ausgebildeten Lagerring zur Begrenzung des radialen Auslenkwegs des elastischen Verbindungsteils wenigstens drei in Umfangsrichtung gegeneinander versetzte Anschlagblöcke angeformt, die über den Ringteil radial zur Nabe vorstehen, jedoch mit radialem Abstand von der Nabe enden. Die zweckmäßigerweise in gleichen Umfangsabständen angeordneten Anschlagblöcke sorgen dafür, daß betriebsmäßig beispielsweise durch Schwingungen oder dergleichen auftretende Fluchtungsfehler nicht zu Schäden an dem elastischen Verbindungsbereich und insbesondere an der mit diesem Verbindungsbereich verbundenen Gegen-Lagerfläche führen. Zweckmäßigerweise ist der Verbindungsbereich beiderseits jedes Anschlagblocks unmittelbar benachbart mit radialen, zur Gegen-Lagerfläche offenen Schlitzen versehen, die im wesentlichen bis an den Ringteil heranreichen. Die verglichen mit dem elastischen Verbindungsbereich steifen Anschlagblöcke wirken sich damit nicht auf die Federeigenschaften des Verbindungsbereichs aus. Bei vergleichsweise geringer Anzahl an Anschlagblöcken kann der Verbindungsbereich zusätzlich durch gleichartige Schlitze in Segmente unterteilt werden, deren Federeigenschaften aufgrund der dadurch verringerten Umfangslänge jedes Segments besser beherrschbar sind. Die Schlitze erstrekken sich jedoch nicht durch den Ringteil hindurch.

Für die Verdrehsicherung des Lagerrings steht zumindest einer der Anschlagblöcke über den äußeren Umfang des Ringteils radial nach außen in Form einer Nase vor, die in eine Aussparung am Umfang der zentralen Öffnung der Seitenscheibe eingreift.

Die Gegenlagerfläche kann unmittelbar an einem der Nabe benachbarten Endabschnitt des Verbindungsbereichs angeformt sein. In einem solchen Fall definieren der Ringteil und der Verbindungsbereich zweckmäßigerweise ein U-förmiges oder V-förmiges Querschnittsprofil des Lagerrings.

In einer Variante des Lagerrings kann die Gegen-Lagerfläche jedoch auch an einem im wesentlichen ringförmig geschlossenen Hülsenbereich angeformt sein, der von dem Verbindungsbereich entsprechend einem im wesentlichen Z-förmigen oder S-förmigen Querschnittsprofil des Lagerrings radial elastisch in dem Ringteil gehalten wird. Auf diese Weise kann der Bereich der Gegen-Lagerfläche unabhängig von dem elastischen Verbindungsbereich bemessen werden. Der Hülsenbereich kann vollständig ringförmig geschlossen sein; die vorstehend erwähnten radialen Schlitze können sich jedoch auch durch den Hülsenbereich hindurch erstrecken.

In einer zweckmäßigen Ausgestaltung erstreckt sich die Gegen-Lagerfläche im wesentlichen über die gesamte axiale Höhe des Hülsenbereichs, so daß sich besonders geringe Flächenpressungen erzielen lassen. Alternativ kann jedoch der Hülsenbereich auch Konusform haben, wobei sich die Gegenlagerfläche nur über einen Teil der axialen Höhe des Hülsenbereichs erstreckt, so daß elastische Eigenschaften des Hülsenbereichs zur Bemessung der radialen Federungseigenschaften des Lagerrings mit ausgenutzt werden können. Die Gegen-Lagerfläche kann sowohl im Bereich des Übergangs des Verbindungsbereichs in den Hülsenbereich als auch von diesem Übergang entfernt am Hülsenbereich angeordnet sein.

Auf der axial der Nabenscheibe zugewandten Seite des Ringteils ist zweckmäßigerweise eine zur Drehachse senkrechte ebene Reibfläche vorgesehen, so daß der Lagerring zugleich als Komponente einer Reibeinrichtung des Drehschwingungsdämpfers ausgenutzt werden kann. Um zusätzlichen Bauraum für weitere Komponenten insbesondere von Reibeinrichtungen zu gewinnen, trägt der Ringteil zweckmäßigerweise einen axial vorstehenden Ringansatz, dessen Stirnfläche die Reibfläche bildet.

Im folgenden werden Ausführungsbeispiele der Erfindung anhand einer Zeichnung näher erläutert. Hierbei zeigt:
- Fig. 1: eine Schnittdarstellung eines Ausführungsbeispiels einer erfindungsgemäßen Kupplungsscheibe einer Kraftfahrzeug-Reibungskupplung;
- Fig. 2: eine Detailansicht der Kupplungsscheibe gesehen entlang einer Linie II-II in Fig. 1;
- Fig. 3: eine Seitenansicht eines Lagerrings der Kupplungsscheibe nach Fig. 1, gesehen in Richtung eines Pfeils III in Fig. 4;
- Fig. 4: eine Schnittansicht des Lagerrings;
- Fig. 5: eine Seitenansicht des Lagerrings, gesehen in Richtung eines Pfeils V in Fig. 4;
- Fig. 6: eine teilweise Schnittansicht einer Variante der Kupplungsscheibe nach Fig. 1;
- Fig. 7: eine teilweise Schnittansicht einer weiteren Variante der Kupplungsscheibe nach Fig. 1 und
- Fig. 8 bis 10: teilweise Schnittansichten von Varianten der in den Kupplungsscheiben der Fig. 1 bis 7 vorgesehenen Lagerringe.

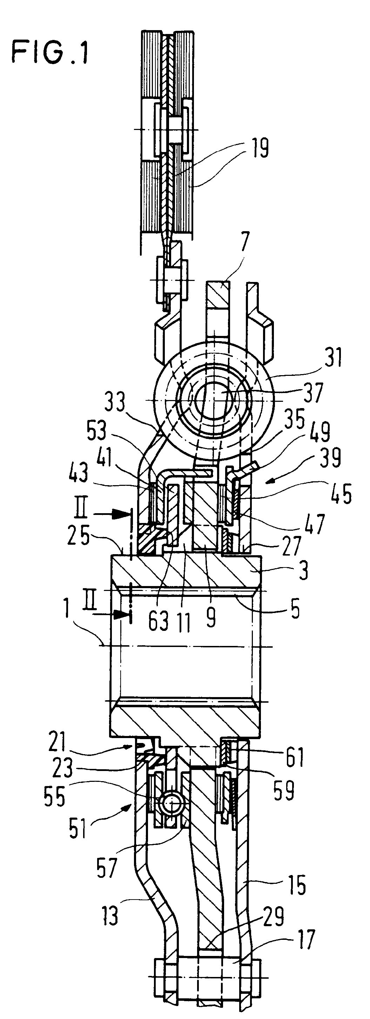

Die in Fig. 1 dargestellte Kupplungsscheibe umfaßt eine zu einer Drehachse 1 einer nicht näher dargestellten Eingangswelle eines Getriebes koaxiale Nabe 3, die über ihre Innenverzahnung 5 drehfest, aber axial beweglich mit der Getriebewelle kuppelbar ist. Die Nabe 3 trägt eine ringscheibenförmige, im wesentlichen radial abstehende Nabenscheibe 7, die über eine Innenverzahnung 9 drehfest, jedoch mit begrenztem Drehspiel mit einer Außenverzahnung 11 der Nabe 3 gekuppelt ist. Axial beiderseits der Nabenscheibe 7 sind Seitenscheiben 13, 15 angeordnet, die durch Abstandnieten 17 fest zu einer Einheit verbunden sind. Die Seitenscheibe 13 trägt Kupplungsreibbeläge 19. Die mit den Kuppelungsreibbelägen 19 versehene Seitenscheibe 13 ist über einen nachstehend noch näher erläuterten Kunststoff-Lagerring 21, der in eine zentrale Öffnung 23 der Seitenscheibe 13 eingesetzt ist, axial seitlich der Nabenscheibe 7 auf einer zylindrischen, äußeren Umfangsfläche 25 der Nabe 3 drehbar gelagert. Die Nabe 3 durchsetzt mit radialem Spiel eine zentrale Öffnung 27 der anderen Seitenscheibe 15. Die Abstandnieten 17 durchdringen Öffnungen 29 der Nabenscheibe 7 und begrenzen zugleich den Drehwinkel der Seitenscheiben 13, 15 relativ zur Nabe 3.

Die Seitenscheiben 13, 15 sind über mehrere in Umfangsrichtung gegeneinander versetzte Schraubenfedern 31, von denen lediglich eine dargestellt ist, drehelastisch mit der Nabenscheibe 7 und über die Verzahnungen 9, 11 mit der Nabe 3 gekuppelt. Die Schraubenfedern 31 sitzen in axial zueinander ausgerichteten Fenstern 33, 35, 37 der Seitenscheiben 13, 15 einerseits und der Nabenscheibe 7 andererseits. Die Federn 31 bilden einen im Lastbetrieb wirksamen Drehschwingungsdämpfer dem eine zwischen den Seitenscheiben 13, 15 angeordnete Last-Reibeinrichtung 39 zugeordnet ist. Die Last-Reibeinrichtung 39 umfaßt einen zwischen der Seitenscheibe 13 und einen an der Nabenscheibe 7 abgestützten Druckring 41 angeordneten Reibring 43 sowie einen an der Nabenscheibe 7 abgestützten weiteren Reibring 45, der von einer an der Seitenscheibe 15 abgestützten Tellerfeder 47 über einen drehfest an der Seitenscheibe 15 geführten Druckring 49 gegen die Nabenscheibe 7 gedrückt wird.

Der Last-Drehschwingungsdämpfer 39 ist erst nach Ausgleich des Drehspiels der Verzahnungen 9, 11 wirksam. Das Drehspiel bestimmt den Arbeitsbereich eines für den Leerlaufbetrieb bemessenen Drehschwingungsdämpfers 51, der eine an der Nabe 3 drehfest gehaltene weitere Nabenscheibe 53 und wenigstens eine Schraubenfeder 55 umfaßt, über die die Nabe 3 mit der Seitenscheibe 13 drehelastisch gekuppelt ist. Die Feder 55 sitzt hierbei in axial zueinander ausgerichteten Aussparungen einer drehfest mit der Nabenscheibe 7 verbundenen Seitenscheibe 57 und des Druckrings 41 einerseits und der Nabenscheibe 53 andererseits. Eine für den Leerlaufbetrieb bemessene Reibeinrichtung umfaßt eine zwischen der Seitenscheibe 15 einerseits und über einen Druckring an der Nabe 3 andererseits abgestützte, axial wirkende Wellfeder 61, die eine durch den Lagerring 21 gebildete Reibfläche 63 gegen die Nabenscheibe 53 vorspannt.

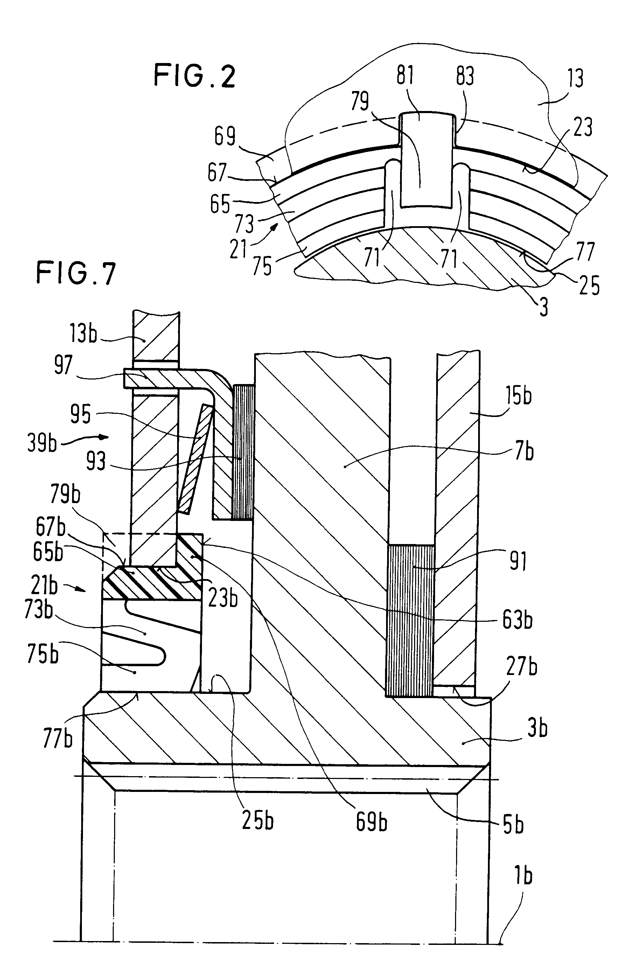

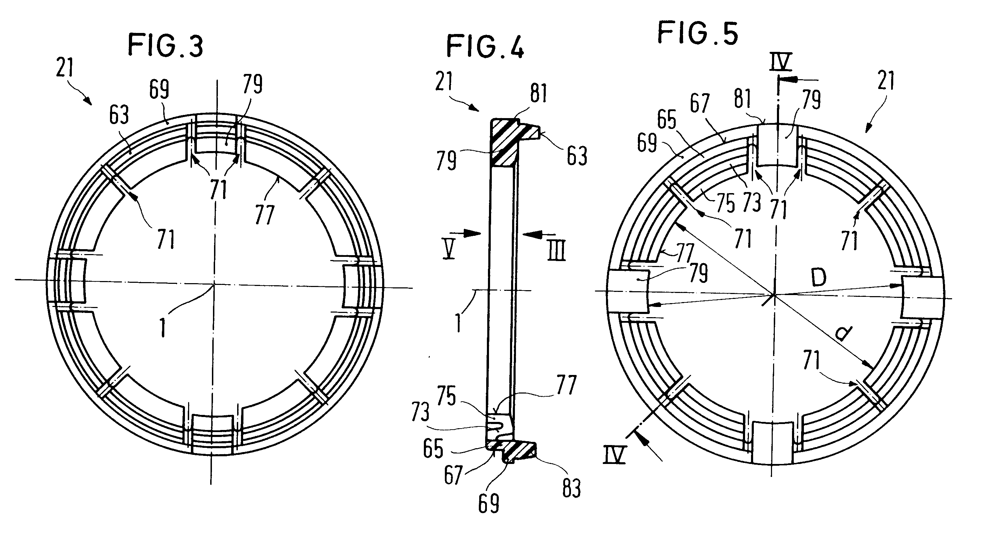

Im Betrieb der Reibungskupplung rotieren die Reibbeläge 19 und damit die Seitenscheiben 13, 15 um die Drehachse der Kurbelwelle des Motors, während die Nabe 3 um die Drehachse 1 der Getriebeeingangswelle rotiert. Fluchtungsfehler und Schrägstellungsfehler der beiden Wellen beanspruchen die Komponenten der Drehschwingungsdämpfer 39, 51 und insbesondere deren Reibeinrichtungen. Um dies zu vermeiden, führt der Lagerring 21 die Seitenscheibe 13 radial elastisch an der Nabe 3. Wie am besten die Fig. 2 bis 5 zeigen, umfaßt der aus zumindest begrenzt elastischem Kunststoffmaterial bestehende, als einteiliges Kunststofformteil ausgebildete Lagerring 21 einen geschlossenen Ringteil 65, der die zentrale Öffnung 23 der Seitenscheibe 13 durchsetzt und mit seinem Außenumfang 67 in der zentralen Öffnung 23 der Seitenscheibe 13 radial fixiert ist. Auf der axial zur Nabenscheibe 7 zugewandten Seite steht ein Ringflansch 69 nach radial außen ab, der an der Seitenscheibe 13 anliegt und den Lagerring 21 axial fixiert. Vom Innenumfang des Ringteils 65 erstreckt sich ein bis auf nachfolgend noch näher erläuterte radiale Schlitze 71 im wesentlichen ringförmig konischer Verbindungsbereich 73 zur Nabe 3 hin. Der Nabe benachbart geht der Verbindungsbereich 73 in einen bis auf die Schlitze 71 ebenfalls ringförmigen Hülsenbereich 75 über, dessen innere Umfangsfläche eine an der zylindrischen Lagerfläche 25 der Nabe 3 anliegende zylindrische Gegenlagerfläche 77 bildet. Der Lagerring 21 hat, wie am besten Fig. 4 zeigt, im wesentlichen Z- bzw. S-förmiges Querschnittsprofil, und der konische, d.h. geneigt zur Drehachse 1 verlaufende Verbindungsbereich 73 sorgt durch seine elastischen Eigenschaften dafür, daß sich der Hülsenbereich 75 relativ zum Ringteil 67 radial elastisch versetzen kann. Die Schlitze 71 sind zur Gegenlagerfläche 77 hin offen und erstrecken sich radial durch den Hülsenbereich 75 und den Verbindungsbereich 73 hindurch bis an den Ringteil 65 heran. Der Hülsenbereich 75 und der Verbindungsbereich 73 wird dadurch in voneinander in Umfangsrichtung getrennte Segmente unterteilt, was den Federeigenschaften zugute kommt.

In Umfangsrichtung gegeneinander in gleichen Abständen versetzt sind an dem Ringteil 65 mehrere, hier vier, Abstandblöcke 79 angeformt, die über den Ringteil 65 nach innen zur Nabe 3 hin vorstehen, jedoch im Abstand von der Lagerfläche 25 der Nabe 3 enden (Fig. 2). Der lichte Abstand D der Abstandblöcke 79 ist damit größer als der Innendurchmesser d der Gegen-Lagerfläche 77 des Hülsenbereichs 75 (Fig. 5). Die Abstandblöcke 79 begrenzen den maximalen Federweg des Verbindungsbereichs 73 und verhindern so Schäden des Lagerrings 21 bei übermäßigen Fluchtungsfehlern.

Die Abstandblöcke 79 sind nach radial außen hin über den Außenumfang 67 des Ringteils 65 hinaus verlängert und bilden hier Nasen 81, die in komplementäre Aussparungen 83 der zentralen Öffnung 23 der Seitenscheibe 13 eingreifen und den Lagerring 21 drehfest an der Seitenscheibe 13 führen. Jeder der Abstandblöcke 79 ist in Umfangsrichtung beiderseits durch unmittelbare benachbarte Schlitze 71 begrenzt, die die Abstandblöcke 79 von den benachbarten Abschnitten des Verbindungsbereichs 73 bzw. des Hülsenbereichs 75 trennen.

Die Abmessungen des Lagerrings 21 sind so gewählt, daß die Gegen-Lagerfläche 77 im eingebauten Zustand des Lagerrings 21 im wesentlichen spielfrei, jedoch im wesentlichen auch ohne Vorspannung an der Lagerfläche 25 der Nabe 3 anliegt. Aufgrund der Eigenelastizität des Kunststoffmaterials gleicht der Verbindungsbereich 73 Fluchtungsfehler und Schiefstellungen zwischen der Kurbelwelle der Brennkraftmaschine und der Getriebeeingangswelle aus. Da sich die Gegen-Lagerfläche 77 im wesentlichen über die gesamte axiale Höhe des Hülsenbereichs 75 erstreckt, ergeben sich geringe Flächenpressungen. Die vorzugsweise vollständig fehlende Vorspannung des Lagerrings 21 zur Lagerfläche 25 der Nabe 3 sorgt für eine sehr geringe Grundreibung des Leerlaufdrehschwingungsdämpfers 55 aufgrund der Lagerreibung. Der Lagerring 21 wird andererseits zur Reibungsdämpfung im Leerlaufbetrieb herangezogen und trägt hierzu auf seiner der Nabenscheibe 53 axial zugewandten Seite einen Ringansatz 83, dessen axiale Stirnfläche die vorstehend erwähnte Reibfläche 63 bildet.

Im folgenden werden Varianten der Kupplungsscheibe der Fig. 1 bis 5 erläutert. Gleichwirkende Komponenten sind mit den Bezugszahlen der Fig. 1 bis 5 und zur Unterscheidung mit einem Buchstaben versehen. Zur Erläuterung des Aufbaus und der Wirkungsweise wird auf die Beschreibung der Fig. 1 bis 5 Bezug genommen.

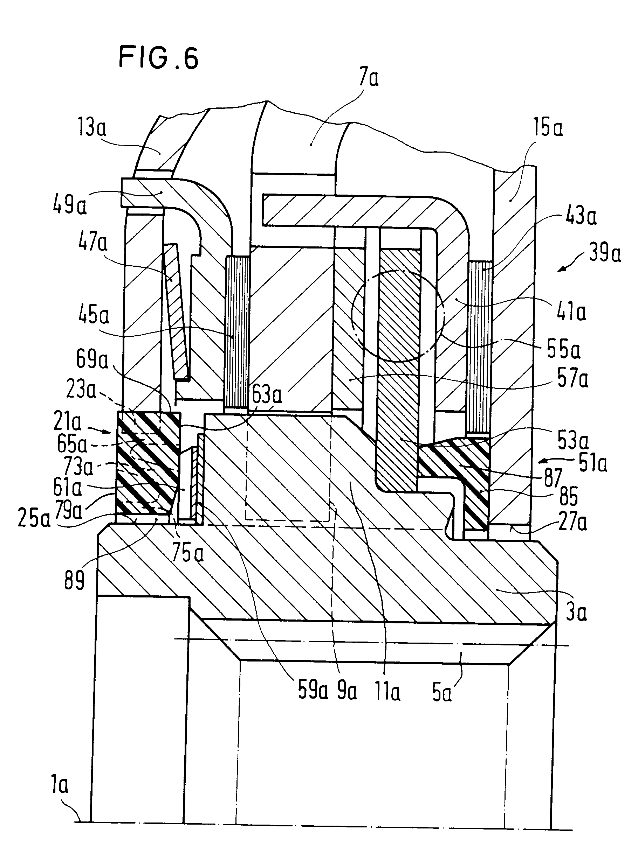

Die Kupplungsscheibe der Fig. 6 unterscheidet sich von der Kupplungsscheibe der Fig. 1 bis 5 in erster Linie durch die Gestaltung der Reibeinrichtungen des Haupt-Drehschwingungsdämpfers 39a und des Leerlauf-Drehschwingungsdämpfers 51a. Der Reibring 43a, der als Seitenscheibe des Leerlauf-Drehschwingungsdämpfers 51a dienende Druckring 41a, die Nabenscheibe 53a und die Seitenscheibe 57a sind bei der Kupplungsscheibe der Fig. 6 auf der dem Lagerring 21a axial abgewandten Seite der Nabenscheibe 7a angeordnet, während der Reibring 45a, die Tellerfeder 47a und der Druckring 49a auf der dem Lagerring 21a benachbarten Seite der Nabenscheibe 7a vorgesehen sind. Dementsprechend sind auch die axial wirkende Feder 61 und der Reibring 59a des Leerlauf-Drehschwingungsdämpfers 51a dem Lagerring 21a benachbart, wobei sich die Feder 61a unmittelbar an der durch eine zur Drehachse 1a senkrechten Stirnfläche des Lagerrings 21a gebildeten Reibfläche 63a des Lagerrings 21a abstützt. Auf der dem Lagerring 21a axial abgewandten Seite der Nabenscheibe 53a ist ein Reibring 85 angeordnet, der mit der axialen Stirnfläche eines Ringansatzes 87 an der Nabenscheibe 53a anliegt. Da sowohl die Feder 61a als auch der Ring 59a aus Metall hergestellt sind, ist die Reibung zwischen diesen Komponenten größer als zwischen der Feder 61a und der Reibfläche 63a, so daß der Lagerring 21a unmittelbar als Reibelement ausgenutzt wird. Fig. 6 zeigt den Lagerring 21a in einem Schnitt durch den Abstandblock 79a. Der Verbindungsbereich 73a und der Hülsenbereich 75a sind durch gestrichelte Linien angedeutet. Der Lagerring 21a sowie seine Anbringung an der Seitenscheibe 13a entspricht im übrigen dem Lagerring der Kupplungsscheibe der Fig. 1 bis 5. Der den maximalen radialen Federweg festlegende radiale Abstand der Abstandblöcke 79a von der Lagerfläche 25a der Nabe 3a ist bei 89 zu erkennen.

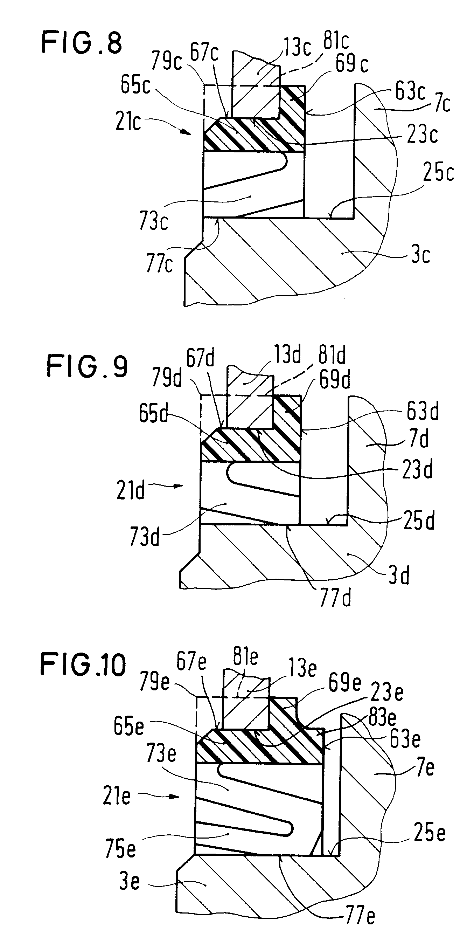

Fig. 7 zeigt eine Variante der Kupplungsscheibe, bei welcher im Unterschied zu den Kupplungsscheiben der Fig. 1 bis 6 die Nabenscheibe 7b feste. d.h. ohne Drehspiel, mit der Nabe 3b verbunden ist. Der Last-Reibungsdämpfer 39b umfaßt eine Reibeinrichtung mit einem zwischen der Seitenscheibe 15b und der Nabenscheibe 7b angeordneten Reibring 91, einen zwischen der Seitenscheibe 13b und der Nabenscheibe 7b angeordneten Reibring 93 und eine Tellerfeder 95, die axial zwischen der Seitenscheibe 13b und einem relativ zur Seitenscheibe 13b drehfest geführten Druckring 97 angeordnet ist und den Reibring 93 zwischen dem Druckring 97 und der Nabenscheibe 7b einspannt. Eine Leerlauf-Reibeinrichtung ist bei der Kupplungsscheibe der Fig. 7 der Einfachheit halber nicht vorgesehen. Der Lagerring 21b entspricht jedoch von seinem Aufbau und seiner Wirkungsweise dem Lagerring der Kupplungsscheibe nach Fig. 6. Der durch die zentrale Öffnung 27b der Seitenscheibe 15b zur Nabe 3b hin gebildete Ringspalt hat eine radiale Höhe, die größer ist als der maximale Federweg des Lagerrings 21b, wie er durch die Abstandblöcke 79b festgelegt ist. Im übrigen entspricht die Kupplungsscheibe der Fig. 7 der Kupplungsscheibe der Fig. 1.

Fig. 8 zeigt eine Variante eines bei den Kupplungsscheiben der Fig. 1 bis 7 verwendbaren Lagerrings 21c, der sich von den vorstehend erläuterten Lagerringen im wesentlichen nur durch die Gestaltung des Verbindungsbereichs und des Hülsenbereichs unterscheidet. Der Lagerring 21c umfaßt insbesondere wiederum einen geschlossenen Ringteil 65c, der mit seiner äußeren Umfangsfläche 67c in einer zentralen Öffnung 23c der Seitenscheibe 13c sitzt und auf der axial der Nabenscheibe 7c benachbarten Seite einen radial nach außen abstehenden Ringflansch 69c trägt. Der Ringflansch 69c fixiert den ebenfalls als einteiliges Kunststofformteil ausgebildeten Lagerring 21c axial an einer Seitenfläche der Seitenscheibe 13c. Die der Nabenscheibe 7c axial zugewandte, senkrecht zur Drehachse verlaufende Stirnfläche 63c kann in nicht näher dargestellter Weise zur Reibkrafterzeugung ausgenutzt werden. Vom inneren Umfang des Ringteils 65c steht ein konusförmig von der Nabenscheibe 7c weg sich verjüngender Verbindungsbereich 73c ab, der an seinem dem Ringteil 65c entfernten Ende eine zylindrische Gegenlagerfläche 77c bildet, mit der er im wesentlichen ohne Vorspannung an der zylindrischen Lagerfläche 25c der Nabe 3c anliegt. Der Verbindungsbereich ist entsprechend den vorstehend erläuterten Lagerringen radial geschlitzt, wobei die Schlitze zur Gegen-Lagerfläche 77c offen sind und bis an den Ringteil 65c heranreichen. Auch der Lagerring 21c ist mit Abstandblöcken 79c versehen, die den radialen Federweg des Verbindungsbereichs 73c begrenzen und sich radial nach außen über den Ringteil 65c in Form von Nasen 81c hinauserstrecken. Die Naser 81c greifen zur drehfesten Halterung der Lagerringe 21c in entsprechende Aussparungen der zentralen Öffnung 23c der Seitenscheibe 13c.

Fig. 9 zeigt eine Variante eines Lagerrings 21d, die sich von dem Lagerring 21c im wesentlichen nur dadurch unterscheidet, daß sich der radial geschlitzte, radial elastische Verbindungsbereich 73d zur Nabenscheibe 7d hin konisch verjüngt. Auch bei dieser Version ist die Gegen-Lagerfläche 77d unmittelbar an dem Verbindungsbereich angeformt. Ebenso wie der Lagerring 21c hat auch der Lagerring 21d im wesentlichen U- bzw. V-förmiges Querschnittsprofil.

Der in Fig. 10 dargestellte Lagerring 21e hat, ähnlich den Lagerringen der Fig. 1 bis 7, wiederum Z- bzw. S-förmiges Querschnittsprofil und unterscheidet sich von diesen Lagerringen in erster Linie dadurch, daß der an das radial innere Ende des Verbindungsbereichs 73e anschließende Hülsenbereich 75e seinerseits Konusform hat und eine an der Lagerfläche 25e im wesentlichen ohne Vorspannung anliegende Gegen-Lagerfläche 77e bildet, die sich lediglich über einen Teilbereich der axialen Höhe des Hülsenbereichs 75e erstreckt. Im dargestellten Ausführungsbeispiel verjüngen sich der Verbindungsbereich 73e und der Hülsenbereich 75e gleichsinnig konisch zur Nabenscheibe 7e hin, womit die Gegenlagerfläche 77e dem Übergang des Hülsenbereichs 75e in dem Verbindungsbereich 73e benachbart ist. Der über die Gegen-Lagerfläche 77e vorstehende Abschnitt des Hülsenbereichs 75e erlaubt eine konstruktive Beeinflussung der Federungseigenschaften des Verbindungsbereichs 73e und des Hülsenbereichs 75e. Auch hier sind der Hülsenbereich 75e und der Verbindungsbereich 73e radial geschlitzt, wie dies anhand der Fig. 1 bis 5 näher erläutert wurde. Es versteht sich, daß der Hülsenbereich 75e auch gegensinnig zum Verbindungsbereich 73e konisch sich verjüngend ausgeführt sein kann, wodurch der maxiale Federweg des Lagerrings erhöht wird.

Der Lagerring 21e umfaßt im übrigen wiederum einen geschlossenen Ringteil 65e, der durch einen radial nach außen abstehenden Ringflansch 69e axial an der Seitenscheibe 13e fixiert ist, und ist mit Abstandblöcken 79e zur Begrenzung des maximalen Federwegs versehen. Auch hier halten radial nach außen abstehende Nasen 81e den Lagerring 21e drehfest in der zentralen Öffnung 23e der Seitenscheibe 13e. Der Lagerring 21e trägt, ähnlich dem Lagerring der Fig. 1, einen axial zur Nabenscheibe 7e abstehenden Ringansatz 83e, dessen axiale Stirnseite 63e zur Reibkrafterzeugung ausgenutzt werden kann. Im Unterschied zum Lagerring der Fig. 1 erstreckt sich jedoch der Verbindungsbereich 73e und dementsprechend auch der Hülsenbereich 75e im wesentlichen über die gesamte axiale Höhe des Ringteils 65e einschließlich des Ansatzes 83e. Auf diese Weise kann die federnde Länge des Verbindungsbereichs 73e vergrößert werden.

Die Übergangsbereiche des Verbindungsbereichs zum Ringteil einerseits und des Verbindungsbereichs zum Hülsenbereich andererseits der vorstehend erläuterten Lagerringe haben im wesentlichen gleiche radiale Querschnittsabmessungen wie der Verbindungsbereich bzw. der Hülsenbereich. Um die Federeigenschaften gezielt beeinflussen zu können, können diese Übergangsbereiche jedoch auch verstärkt oder abgeschwächt werden.

## Patentansprüche

1. Kupplungsscheibe für eine Reibungskupplung, insbesondere eines Kraftfahrzeugs, umfassend
eine Nabe (3) mit einer radial zu einer Drehachse (1) der Nabe (3) von dieser abstehenden Nabenscheibe (7) und einer zylindrischen Lagerfläche (25) axial seitlich der Nabenscheibe (7),
zwei axial beiderseits der Nabenscheibe (7) angeordnete, miteinander fest verbundene Seitenscheiben (13, 15), die relativ zu der Nabenscheibe (7) um einen begrenzten Drehwinkel drehbar sind und je eine zentrale Öffnung (23, 27) haben, durch die die Nabe (3) tritt,
mehrere die Seitenscheiben (13, 15) drehelastisch mit der Nabenscheibe (7) kuppelnde Federn (31) und einen in der zentralen Öffnung (23) einer (13) der beiden Seitenscheiben drehfest gehaltenen Kunststoff-Lagerring (21), welcher einen ringförmig geschlossenen, an der Seitenscheibe (13) anliegenden Ringteil (65) und einen von dem Ringteil (65) zur Nabe (3) sich erstreckenden, an der zylindrischen Lagerfläche (25) der Nabe (3) abgestützten, radial elastischen Verbindungsbereich (73) aufweist, wobei der Ringteil (65) mit seinem äußeren Umfang (67) in der zentralen Öffnung (23) der Seitenscheibe (13) gehalten ist und einen radial nach außen abstehenden, den Ringteil (65) relativ zur Seitenscheibe (13) axial fixierenden Ringflansch (69) trägt,
**dadurch gekennzeichnet,** daß
der Verbindungsbereich (73) zur Drehachse geneigt vom inneren Umfang des Ringteils (65) absteht und eine im wesentlichen ohne radiale Vorspannung an der zylindrischen Lagerfläche (25) der Nabe (3) anliegende zylindrische Gegen-Lagerfläche (77) trägt.

2. Kupplungsscheibe nach Anspruch 1, dadurch gekennzeichnet, daß an dem Ringteil (65) zur Begrenzung des radialen Auslenkwegs des Verbindungsteils (73) wenigstens drei in Umfangsrichtung gegeneinander versetzte Anschlagblöcke (79) angeformt sind, die über den Ringteil (65) hinaus radial zur Nabe (3) vorstehen, jedoch mit radialem Abstand von der Nabe (3) enden.

3. Kupplungsscheibe nach Anspruch 2, dadurch gekennzeichnet, daß der Verbindungsbereich (73) zumindest beiderseits jedes Anschlagblocks (79) unmittelbar benachbart mit radialen, zur Gegen-Lagerfläche (77) offenen Schlitzen (71) versehen ist, die im wesentlichen bis an den Ringteil (65) heranreichen.

4. Kupplungsscheibe nach Anspruch 2 oder 3, dadurch gekennzeichnet, daß zumindest einer der Anschlagblöcke (79) über den äußeren Umfang des Ringteils (65) radial nach außen in Form einer Nase (81) vorsteht, die zur Verdrehsicherung in eine Aussparung (83) am Umfang der zentralen Öffnung (23) der Seitenscheibe (13) eingreift.

5. Kupplungsscheibe nach Anspruch 4, dadurch gekennzeichnet, daß die Nase (81) mit dem Ringflansch (69) abschließt.

6. Kupplungsscheibe nach einem der Ansprüche 1 bis 5, dadurch gekennzeichnet, daß die Gegen-Lagerfläche (77; 77a, b, e) an einem im wesentlichen ringförmig geschlossenen Hülsenbereich (75; 75a, b, e) angeformt ist, der von dem Verbindungsbereich (73) entsprechend einem im wesentlichen Z- oder S-förmigen Querschnittprofil des Kunststoff-Lagerrings (21; 21a, b, e) radial elastisch in den Ringteil (65; 65a, b, e) gehalten ist.

7. Kupplungsscheibe nach Anspruch 6, dadurch gekennzeichnet, daß sich die Gegen-Lagerfläche (77; 77a, b) im wesentlichen über die gesamte axiale Höhe des Hülsenbereichs (75; 75a, b) erstreckt.

8. Kupplungsscheibe nach Anspruch 6, dadurch gekennzeichnet, daß der Hülsenbereich (75e) Konusform hat und sich die Gegen-Lagerfläche (77e) nur über einen Teil der axialen Höhe des Hülsenbereichs (75e) erstreckt.

9. Kupplungsscheibe nach Anspruch 8, dadurch gekennzeichnet, daß die Gegen-Lagerfläche (77e) im Bereich des Übergangs in dem Verbindungsbereich (73e) vorgesehen ist.

10. Kupplungsscheibe nach einem der Ansprüche 1 bis 5, dadurch gekennzeichnet, daß der Kunststoff-Lagerring (21c, d) im wesentlichen U- oder V-förmiges Querschnittsprofil hat und die Gegen-Lagerfläche (77c, d) unmittelbar am inneren Umfang des Verbindungsbereichs (73c, d) angeformt ist.

11. Kupplungsscheibe nach einem der Ansprüche 1 bis 10, dadurch gekennzeichnet, daß auf der axial der Nabenscheibe (7) zugewandten Seite des Ringteils (65) eine zur Drehachse (1) senkrechte ebene Reibfläche (63) vorgesehen ist.

12. Kupplungsscheibe nach Anspruch 11, dadurch gekennzeichnet, daß der Ringteil (65; 65e) einen axial vorstehenden Ringansatz (83; 83e) trägt, dessen Stirnfläche die Reibfläche (63; 63e) bildet.

13. Kupplungsscheibe nach einem der Ansprüche 1 bis 12, dadurch gekennzeichnet, daß der Kunststofflagerring (21) ein einteiliges Kunststoff-Formteil ist.

## Claims

1. A clutch disc for a friction clutch, particularly of a motor vehicle comprising a hub (3) with a hub disc (7) which projects radially in relation to an axis of rotation (1) of the hub (3) and from the hub (3) and having a cylindrical bearing face (25) axially laterally of the hub disc (7), two lateral discs (13, 15) which are connected rigidly to each other and which are disposed axially on either side of the hub disc (7), the lateral discs (13, 15) being adapted for rotation in relation to the hub disc (7) and about a limited angle of rotation, each having a central aperture (23, 27) through which passes the hub (3) and further comprising a plurality of springs (31) coupling the lateral discs (13, 15) resiliently and rotatably to the hub disc (7) and, rotationally rigid in the central aperture (23) of one (13) of the two lateral discs, a synthetic plastics mounting ring (21) which has, bearing on the lateral disc (13), an annularly closed annular part (65) and, extending from the annular part (65) to the hub (3) and supported on the cylindrical bearing face (25) of the hub (3), a radially resilient connecting region (73), the outer periphery (67) of the annular part (65) being held in the central aperture (23) in the lateral disc (13) and carrying a radially outwardly projecting annular flange (69) which axially fixes the annular part (65) in relation to the lateral disc (13), characterised in that the connecting region (73) projects at an angle to the axis of rotation from the inner periphery of the annular part (65) and carries a cylindrical opposing bearing face (77) which rests substantially without radial initial tension on the cylindrical bearing face (25) of the hub (3).

2. A clutch disc according to Claim 1, characterised in that to limit the radial deflection of the connecting part (73), at least three stop blocks (79) which are mutually offset in the peripheral direction and which project beyond the annular part (65) radially in relation to the hub (3) but which end at a radial distance from the hub (3) are formed on the annular part (65).

3. A clutch disc according to Claim 2, characterised in that the connecting region (73) has directly adjacent to and at leats on both sides of each stop block (79) radial slots (71) which are open towards the opposing bearing face (77) and which extend substantially as far as the annular part (65).

4. A clutch disc according to Claim 2 or 3, characterised in that at least one of the stop blocks (79) projects radially outwardly in the form of a nose (81) beyond the outer periphery of the annular part (65) and, to prevent torsion, it engages a recess (83) on the periphery of the central aperture (23) in the lateral disc (13).

5. A clutch disc according to Claim 4, characterised in that the nose (31) ends with an annular flange (69).

6. A clutch disc according to one of Claims 1 to 5, characterised in that the opposing bearing face (77; 77a, b, e) is formed on a substantially annularly closed tube portion (75; 75a, b, e) which is held radially resiliently in the annular part (65; 65a, b, e) by the connecting region (73) corresponding to a substantially Z- or S-shaped cross-sectional profile of the plastics mounting ring (21; 21a, b, e).

7. A clutch disc according to Claim 6, characterised in that the opposing bearing face (77; 77a, b, e) extends substantially over the entire axial height of the tube region (75; 75a, b).

8. A clutch disc according to Claim 6, characterised in that the tube region (75e) has a conical shape and in that the opposing bearing face (77e) extends only over a proportion of the axial height of the tube region (75e).

9. A clutch disc according to Claim 8, characterised in that the opposing bearing face (77e) is provided in the region of the transition in the connecting region (73e).

10. A clutch disc according to one of Claims 1 to 5, characterised in that the plastics mounting ring (21c, d) has a substantially U- or V-shaped cross-sectional profile and in that the opposing bearing face (77c, d) is formed directly on the inner periphery of the connecting region (73c, d).

11. A clutch disc according to one of Claims 1 to 10, characterised in that on the side of the annular part (65) which is axially towards the hub disc (7) there is a plane frictional face (63) at right-angles to the axis of rotation (1).

12. A clutch disc according to Claim 11, characterised in that the annular part (65, 65e) carries an axially projecting annular projection (83, 83e) the end face of which forms the friction face (63, 63e).

13. A clutch disc according to one of Claims 1 to 12, characterised in that the synthetic plastics mounting ring (21) is a one-piece synthetic plastics moulding.

## Revendications

1. Disque d'embrayage pour embrayage à friction, en particulier d'un véhicule à moteur, comprenant un moyeu (3) pourvu d'un disque de moyeu (7) dépassant radialement d'un axe de rotation (1) du moyeu (3) et une surface de palier cylindrique (25) disposée axialement sur un côté du disque de moyeu (7),
deux disques latéraux (13, 15) liés fixement entre eux et disposés axialement de part et d'autre du disque de moyeu (7), pouvant tourner par rapport au disque de moyeu (7) selon un angle de rotation limité et présentant, respectivement, une ouverture centrale (23, 27) traversée par le moyeu (3),
plusieurs ressorts (31) accouplant élastiquement en rotation les disques latéraux (13, 15) au disque de moyeu (7), et
un palier annulaire (21) en matière synthétique maintenu fixement dans l'ouverture centrale (23) de l'un (13) des deux disques latéraux, présentant une partie annulaire (65) fermée reposant sur le disque latéral (13) et une zone de raccordement (73) radialement élastique, s'étendant entre la partie annulaire (65) et le moyeu (3), et s'appuyant sur la surface de palier cylindrique (25) du moyeu (3), la circonférence extérieure (67) de la partie annulaire (65) étant maintenue dans l'ouverture centrale (23) du disque latéral (13), et la partie annulaire portant une bride annulaire (69) dépassant radialement vers l'extérieur, fixant axialement la partie annulaire (65) par rapport au disque latéral (13), caractérisé en ce que la zone de raccordement (73) est inclinée par rapport à l'axe de rotation, dépasse de la circonférence intérieure de la partie annulaire (65), et présente une surface contre-palier cylindrique (77) reposant, sensiblement sans précontrainte radiale, sur la surface de palier cylindrique (25) du moyeu (3).

2. Disque d'embrayage selon la revendication 1, caractérisé en ce qu'au moins trois blocs de butée (79) sont formés sur la partie annulaire (65), décalés les uns par rapport aux autres dans le sens de la circonférence, pour limiter la déviation radiale de la pièce de raccordement (73), qui dépassent sur la partie annulaire (65) radialement en direction du moyeu (3), mais dont l'extrémité reste espacé radialement du moyeu.

3. Disque d'embrayage selon la revendication 2, caractérisé en ce que la zone de raccordement (73), au moins de part et d'autre de chaque bloc de butée (79), est immédiatement adjacente à des fentes radiales (71), ouvertes en direction de la surface de contre-butée (77), qui s'étendent sensiblement jusqu'au niveau de la partie annulaire (65).

4. Disque d'embrayage selon la revendication 2 ou 3, caractérisé en ce qu'afin de garantir l'absence de torsion, au moins un des blocs de butée (79) dépasse radialement vers l'extérieur, par la circonférence extérieure de la parie annulaire (65), sous la forme d'un tenon (81), qui s'engage dans un évidement (83) ménagé sur la circonférence de l'ouverture centrale (23) du disque latéral (13).

5. Disque d'embrayage selon la revendication 4, caractérisé en ce que le tenon (81) fait suite à la bride annulaire (69).

6. Disque d'embrayage selon l'une des revendications 1 à 5, caractérisé en ce que la surface contre-palier (77; 77a, b, e) est formée sur une zone formant manchon (75 ; 75a, b, e) sensiblement annulaire et fermée, qui est maintenue de façon radialement élastique par la zone de raccordement (73) dans la partie annulaire (65 ; 65a, b, e), de façon correspondante à un profil de section transversale sensiblement en forme de Z ou de S du palier annulaire en matière synthétique (21; 21a, b, e).

7. Disque d'embrayage selon la revendication 6, caractérisé en ce que la surface contre-palier (77 ; 77a, b) s'étend sensiblement sur toute la hauteur axiale de la zone formant manchon (75 ; 75a, b).

8. Disque d'embrayage selon la revendication 6, caractérisé en ce que la zone formant manchon (75e) a une forme de cône et en ce que la surface contre-palier (77e) ne s'étend que sur une partie de la hauteur axiale de la zone formant manchon (75e).

9. Disque d'embrayage selon la revendication 8, caractérisé en ce que la surface contre-palier (77e) est prévue, dans la zone de transition, dans la zone de raccordement (73e).

10. Disque d'embrayage selon l'une des revendications 1 à 5, caractérisé en ce que le palier annulaire en matière synthétique (21c, d) a un profil de section transversale ayant sensiblement la forme d'un U ou d'un V et en ce que la surface contre-palier (77c, d) est formée directement sur la circonférence intérieure de la zone de raccordement (73c, d).

11. Disque d'embrayage selon l'une des revendications 1 à 10, caractérisé en ce qu'est prévue, sur le côté de la partie annulaire (65) orienté axialement en direction du disque de moyeu (7), une surface de friction (63) plane perpendiculairement par rapport à l'axe de rotation (1).

12. Disque d'embrayage selon la revendication 11, caractérisé en ce que la partie annulaire (65 ; 65e) porte un épaulement annulaire (83 ; 83e) dépassant axialement, dont la face frontale forme la surface de friction (63 ; 63e).

13. Disque d'embrayage selon l'une des revendications 1 à 12, caractérisé en ce que le palier annulaire en matière synthétique (21) est une pièce préformée monobloc en matière synthétique.
